# FASCICULE DE BREVET EUROPEEN

(11) **EP 3 481 781 B1**
(45) Date de publication et mention de la délivrance du brevet: **02.08.2023**
(21) Numéro de dépôt: 17742485.0
(22) Date de dépôt: 21.06.2017
(51) Int. Cl.: C03B 23/09, C03B 23/045, B29C 49/76

(54) **DISPOSITIF POUR LA RÉALISATION D'UNE OPÉRATION SUR UN PRODUIT, COMPRENANT UN OUTIL APTE À SUIVRE UNE TRAJECTOIRE DU PRODUIT**
VORRICHTUNG ZUR DURCHFÜHRUNG EINER OPERATION AN EINEM PRODUKT MIT EINEM WERKZEUG MIT FÄHIGKEIT, EINEM WEG DES PRODUKTS ZU FOLGEN
DEVICE FOR PERFORMING AN OPERATION ON A PRODUCT, COMPRISING A TOOL CAPABLE OF FOLLOWING A PATH OF THE PRODUCT

(30) Priorité: 06.07.2016 FR 1656494
(43) Date de publication de la demande: 15.05.2019
(73) Titulaire: Nipro Pharmapackaging France, 76390 Aumale (FR)
(72) Inventeur: DOUARRE, Christian, 28330 AUTHON DU PERCHE (FR); LECOMTE, Thibaut, 28330 AUTHON DU PERCHE (FR)
(74) Mandataire: Demulsant, Xavier
(86) Numéro de dépôt international: PCT/FR2017/051642
(87) Numéro de publication internationale: WO 2018/007712

(56) Documents cités:
- GB-A- 802 993
- US-A- 2 984 048

## Description

L'invention a trait au domaine de la réalisation d'une opération sur un produit, et plus précisément au suivi de la trajectoire de ce produit par un outil pendant la réalisation de l'opération par l'outil.

Dans une machine, un produit en cours de fabrication ou d'assemblage est généralement mû à vitesse constante le long d'une trajectoire prédéfinie par la machine.

Certaines opérations de fabrication ou d'assemblage du produit peuvent être réalisées pendant une durée très courte, cette durée étant fonction de la vitesse de déplacement du produit induite par la machine. Ces opérations sont réalisées à une position fixe de la trajectoire du produit.

D'autres opérations nécessitent une durée de réalisation importante. Ces opérations peuvent être réalisées en réduisant la vitesse de la machine, voir même en stoppant la machine. Une telle pratique grève la cadence de production et n'est donc pas une alternative satisfaisante pour les industriels.

Il est connu, pour augmenter la durée d'une opération réalisée par un outil, d'augmenter la taille de cet outil. Le document US 5300134 décrit une machine tournante pour le formage d'un col sur une ampoule en verre par un outil, l'ampoule suivant une trajectoire prédéfinie par la machine tournante.

L'outil comprend un galet mobile en translation suivant une direction sensiblement perpendiculaire à la trajectoire de l'ampoule. Le galet est mobile entre une position avancée et une position reculée où le galet est éloigné de la machine tournante par rapport à sa position avancée. Le galet, en position avancée, est en contact avec l'ampoule depuis une position initiale de l'ampoule. L'ampoule suit la trajectoire définie par la machine tournante jusqu'à une position intermédiaire. Le galet reste en contact avec l'ampoule tout au long du déplacement de l'ampoule depuis sa position initiale jusqu'à sa position intermédiaire où le galet se trouve en position reculée. L'ampoule continue à suivre la trajectoire définie par la machine tournante jusqu'à une position finale. Le galet reste en contact avec l'ampoule tout au long du déplacement de l'ampoule depuis sa position intermédiaire jusqu'à sa position finale où le galet reprend sa position avancée.

La position initiale et la position finale de l'objet pourraient aisément être écartées, et donc la durée de l'opération réalisée par le galet pourrait être augmentée, en augmentant la taille du galet. Cependant, la taille du galet est limitée par l'encombrement maximal de la machine tournante.

Ainsi, afin d'augmenter la durée d'une opération tout en minimisant l'encombrement d'une machine, le document US 4441908 décrit une machine tournante pour le formage d'un col sur une ampoule en verre par un outil, l'ampoule suivant une trajectoire définie par la machine tournante. L'outil est mobile suivant une trajectoire fermée définie par un chemin de la machine tournante. La trajectoire fermée du chemin comprend une partie de formage sensiblement parallèle à la trajectoire de l'ampoule, de telle sorte que l'outil soit apte à suivre la trajectoire de l'ampoule et former le col de cette ampoule pendant la partie de formage du chemin.

GB802993 A et US2984048 A font référence à un dispositif pour la réalisation d'une opération de formage sur un produit en verre creux. Les dispositif a deux extrémités, un élément de rappel, et une direction de travail mobile en rotation autour d'un axe passant par la deuxième extrémité.

Une telle machine tournante permet effectivement d'augmenter la durée d'une opération à réaliser tout en minimisant l'encombrement de la machine en augmentant la longueur de la partie de formage suivie par l'outil. Cependant, pour que l'outil et l'ampoule se déplacent de manière uniforme, la partie de formage définie par le chemin doit correspondre précisément à la trajectoire suivie par l'ampoule, entraînant une complication dans la fabrication et le montage du chemin, et l'ampoule et l'outil doivent être reliés à un même mécanisme de mise en mouvement ou à deux mécanismes de mise en mouvement fonctionnant en phase, entraînant une consommation d'énergie importante.

Un premier objectif est de proposer un dispositif apte à suivre une trajectoire prédéfinie d'un produit.

Un deuxième objectif est de proposer un dispositif peu encombrant.

Un troisième objectif est de proposer un dispositif minimisant une consommation d'énergie.

Un quatrième objectif est de proposer un dispositif simple de fabrication.

Un cinquième objectif est de proposer une machine comprenant un dispositif répondant aux objectifs précédant dont le montage et le réglage par rapport à la machine est simple.

A cet effet, il est proposé selon la revendication 1, en premier lieu, un dispositif pour la réalisation d'une opération sur un produit en verre, ce dispositif comprenant :
- une première extrémité ;
- une deuxième extrémité, définissant avec la première extrémité une direction de travail du dispositif ;

la première extrémité étant :
   - mobile par glissement par rapport à la deuxième extrémité suivant la direction de travail ;
   - maintenue en une position avancée, au moyen d'un élément de rappel primaire du dispositif, à une distance maximale de la deuxième extrémité ;
la direction de travail est mobile en rotation autour d'un axe passant par la deuxième extrémité, la première extrémité est configurée pour être mise en mouvement de sorte à mettre en rotation la direction de travail autour de l'axe depuis une première position de la direction de travail jusqu'à une deuxième position de la direction de travail, la première extrémité suit une trajectoire suiveuse le long de laquelle la distance entre la première extrémité et la deuxième extrémité est inférieure ou égale à la distance maximale, l'élément de rappel primaire permet la variation de la distance entre la première extrémité et la deuxième extrémité le long de la trajectoire suiveuse.

Le dispositif est ainsi simple de fabrication et peu encombrant.

L'élément de rappel primaire permet un fonctionnement du dispositif sans moteur, ne nécessitant donc pas de forte consommation énergétique.

Le dispositif, ainsi réalisé, permet de suivre une trajectoire guide prédéfinie quelconque sans réglage du dispositif.

Diverses caractéristiques supplémentaires peuvent être prévues, seules ou en combinaison :
- il comprend un élément de rappel secondaire, disposé au niveau de la deuxième extrémité, de sorte à mettre en rotation la direction de travail autour de l'axe jusqu'à la première position de la direction de travail ;
- l'élément de rappel primaire est un ressort de compression ;
- l'élément de rappel secondaire est un ressort de torsion ;
- il comprend une tige solidaire de la première extrémité et un support solidaire de la deuxième extrémité, la tige coulissant dans une ouverture du support ;
- la première extrémité comprend un outil apte à réaliser l'opération sur le produit ;
- l'outil est un galet.

Il est proposé, en second lieu, une machine définissant une trajectoire guide prédéfinie et comprenant un dispositif tel que présenté ci-dessus, dans laquelle la trajectoire suiveuse de la première extrémité est parallèle à la trajectoire guide.

Diverses caractéristiques supplémentaires peuvent être prévues, seules ou en combinaison :
- la machine comprend une mâchoire configurée pour être solidaire du produit et pour être mue le long de la trajectoire guide définie par la machine ;
- le dispositif comprend un palpeur, configuré pour être en contact avec la mâchoire, l'élément de rappel primaire poussant le palpeur contre la mâchoire de telle sorte que la première extrémité suive la trajectoire guide définissant la trajectoire suiveuse.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique représentant un dispositif pour le suivi d'un produit et les trajectoires suivies par les différents éléments ;
- la figure 2 est une vue schématique en perspective d'un mode de réalisation du dispositif dans une position avancée ;
- la figure 3 est une vue schématique en perspective du dispositif dans une position reculée ;
- la figure 4 est une vue schématique en perspective d'une machine comprenant le dispositif représenté sur la figure 2, le dispositif entrant en contact avec le produit ;
- la figure 5 est une vue schématique en perspective de la machine comprenant le dispositif, le dispositif étant entrain de réaliser une opération sur le produit ;
- la figure 6 est une vue schématique en perspective de la machine comprenant le dispositif, le produit s'écartant du dispositif.

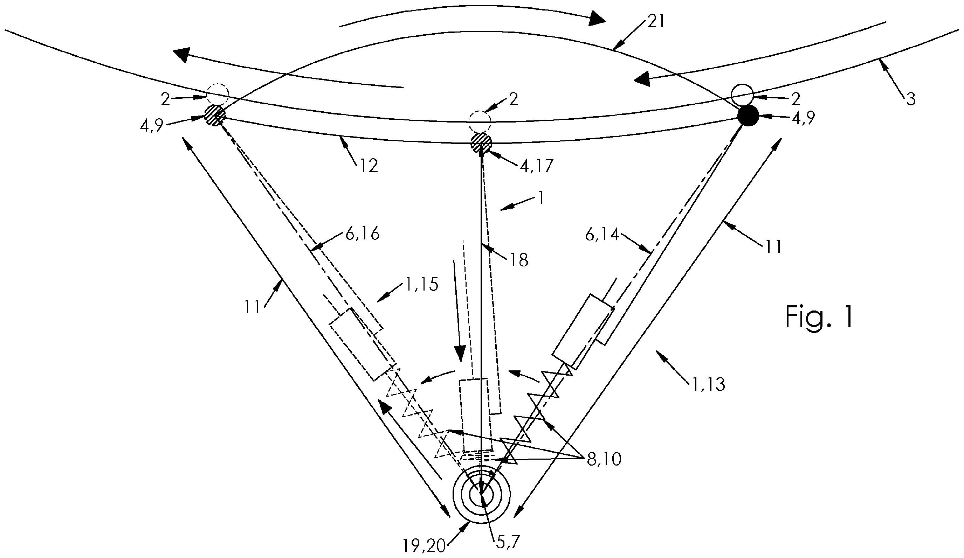

Sur la figure 1 est représenté un dispositif **1** pour la réalisation d'une opération sur un produit **2.**

Le produit **2** est mobile le long d'une trajectoire **3** guide prédéfinie.

Le dispositif **1** comprend une première extrémité **4** et une deuxième extrémité **5** définissant avec la première extrémité **4** une direction **6** de travail du dispositif **1.** La direction **6** de travail représente la direction dans laquelle le dispositif **1** est apte à réaliser l'opération sur le produit **2.**

La direction **6** de travail est mobile en rotation autour d'un axe **7** passant par la deuxième extrémité **5.**

La deuxième extrémité **5** est fixe par rapport à la trajectoire **3** guide.

La première extrémité **4** est mobile par glissement par rapport à la deuxième extrémité **5** suivant la direction **6** de travail. Selon le mode de réalisation représenté, la première extrémité **4** est mobile par translation par rapport à la deuxième extrémité.

Le dispositif **1** comprend un élément **8** de rappel primaire maintenant la première extrémité **4** en une position **9** avancée. Selon le mode de réalisation représenté, l'élément **8** de rappel primaire est un ressort **10** de compression. En position **9** avancée, la première extrémité **4** et la deuxième extrémité **5** sont séparées d'une distance **11** maximale.

La première extrémité **4** est apte à venir en contact avec le produit **2** parcourant la trajectoire **3** guide.

L'élément **8** de rappel primaire pousse la première extrémité **4** contre le produit **2** de telle sorte que la première extrémité **4** décrive une trajectoire **12** suiveuse sensiblement parallèle à la trajectoire **3** guide.

La trajectoire **12** suiveuse est définie entre une position **13** initiale du dispositif **1,** où la première extrémité **4** est en position **9** avancée et la direction **6** de travail se trouve dans une première position **14,** et une position **15** finale du dispositif **1,** où la première extrémité **4** est en position **9** avancée et la direction **6** de travail se trouve dans une deuxième position **16.**

En parcourant la trajectoire **12** suiveuse, la première extrémité **4** est disposée entre la position **9** avancée et une position **17** reculée où la première extrémité **4** et la deuxième extrémité **5** sont séparées d'une distance **18** minimale inférieure à la distance **11** maximale.

Entre la position **13** initiale et la position **15** finale du dispositif **1,** la distance séparant le produit **2** et la deuxième extrémité **5** du dispositif **1** est inférieure ou égale à la distance **11** maximale séparant la première extrémité **4** de la deuxième extrémité **5.** En d'autres termes, la première extrémité **4** reste en contact avec le produit **2,** c'est-à-dire définie la trajectoire **12** suiveuse, tant que le produit **2** se trouve à une distance inférieure ou égale de la distance **11** maximale.

Selon le mode de réalisation représenté, la trajectoire **3** guide est en forme d'arc de cercle. Cependant, la trajectoire **3** guide peut avoir une forme quelconque, tant que la distance séparant le produit **2** et la deuxième extrémité **5** du dispositif **1** est inférieure ou égale à la distance **11** maximale.

Selon un mode de réalisation, le dispositif **1** comprend un élément **19** de rappel secondaire disposé au niveau de la deuxième extrémité **5** configuré pour ramener la direction **6** de travail en première position **14.** Selon le mode de réalisation représenté, l'élément **8** de rappel primaire est un ressort **20** de torsion. Selon le mode de réalisation représenté, la première extrémité **4** définie, depuis la position **15** finale vers la position **13** initiale du dispositif **1,** une trajectoire **21** retour en arc de cercle.

Selon un mode de réalisation non représenté, plusieurs dispositifs **1** partagent la même deuxième extrémité **5** et leurs direction **6** de travail respectives sont séparées d'un angle constant de telle sorte que la distance séparant la première extrémité **4** d'un premier dispositif **1** disposé en position **13** initiale et la première extrémité **4** d'un deuxième dispositif **1** disposé en position **15** finale soit égale à la distance séparant deux produits **2** consécutifs parcourant la trajectoire **3** guide.

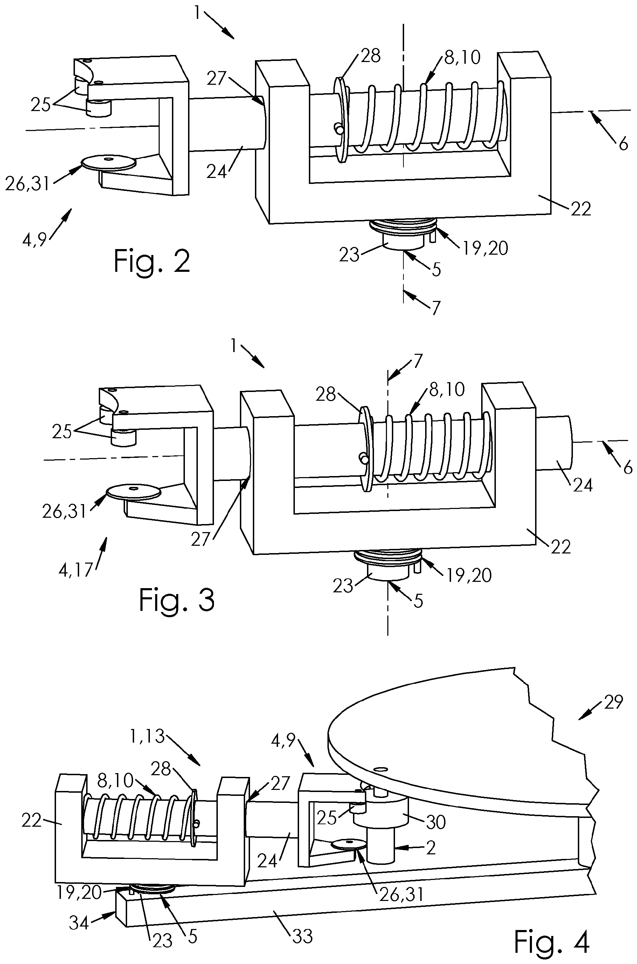

Selon le mode de réalisation selon l'invention représenté sur les figures 2 à 6, le dispositif **1** comprend un support **22** muni d'un pion **23** définissant la deuxième extrémité **5** du dispositif **1.** Le dispositif **1** comprend également une tige **24** munie d'un palpeur **25** et d'un outil **26** définissant conjointement la première extrémité **4** du dispositif **1.**

Le support **22** comprend deux ouvertures **27** de formes complémentaires à la forme de la tige **24** de telle sorte que la tige **24** soit apte à coulisser dans les ouvertures **27.** Le palpeur **25** et l'outil **26** de la tige **24,** définissant la première extrémité **4** du dispositif **1,** sont ainsi mobiles entre la position **9** avancée et la position **17** reculée.

La tige **24** comprend une butée **28** sur laquelle le ressort **10** de compression prend appui. Le ressort **10** de compression prend également appui sur le support **22** du dispositif **1** maintenant le palpeur **25** et l'outil **26** en position **9** avancée.

Selon le mode de réalisation représenté, le ressort **20** de torsion est disposé autour du pion **23** du support **22.**

Comme représenté sur les figures 4 à 6, la trajectoire **3** guide est définie par une machine **29** comprenant une mâchoire **30** parcourant la trajectoire **3** guide. La mâchoire **30** est apte à agripper le produit **2** qui, selon le mode de réalisation représenté, est un tube de section circulaire en verre. Avantageusement, la mâchoire **30** est apte à tourner autour de l'axe de révolution du produit **2.**

Selon le mode de réalisation représenté, l'outil **26** est un galet **31** apte à réaliser une opération de formage d'un col **32** sur le produit **2.**

La machine **29** comprend également un bras **33** fixe par rapport au centre de l'arc de cercle défini par la trajectoire **3** guide. Le pion **23** du support **22** est disposé à une extrémité **34** externe du bras **33.**

Lorsque le dispositif **1** est en position **13** initiale, comme illustré sur la figure 4, le palpeur **25** de la tige **24** prend appui sur la mâchoire **30** et l'outil **26** entre en contact avec le produit **2.**

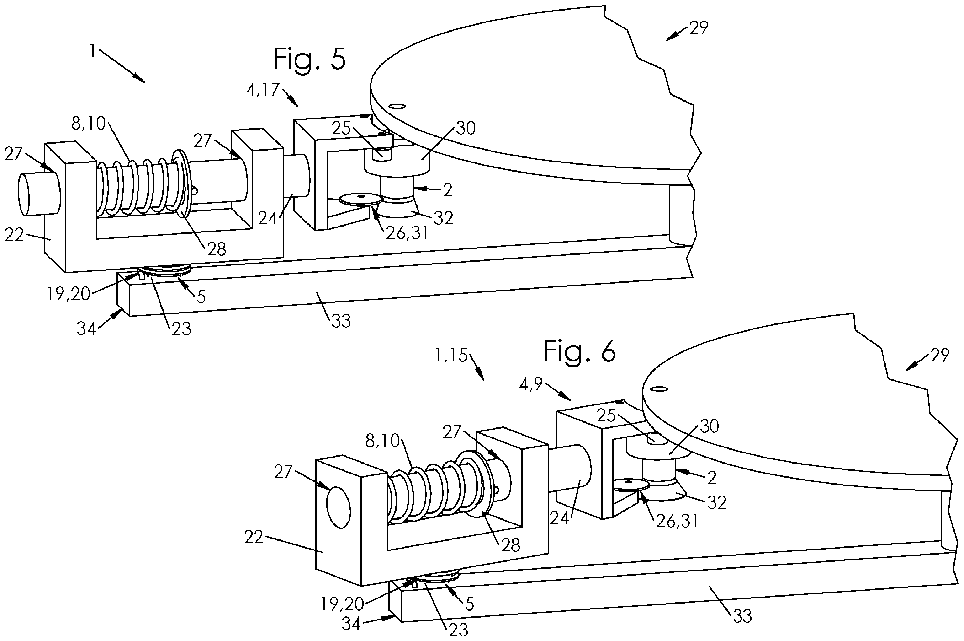

Lorsque le dispositif **1** est positionné entre la position **13** initiale et la position **15** finale, comme illustré sur la figure 5, le palpeur **25** et le ressort **10** de compression permettent au dispositif **1** de suivre la trajectoire **3** guide du produit **2.** Le produit **2** est en cours de formage par le biais de l'outil **26.** La première extrémité **4** définie alors la trajectoire **12** suiveuse.

Lorsque le dispositif **1** est en position **15** finale, comme illustré sur la figure 6, le formage du produit **2** est terminé, la distance séparant la deuxième extrémité **5** du dispositif **1** et le produit **2** est supérieure à la distance **11** maximale séparant la première extrémité **4** de la deuxième extrémité **5** interrompant le contact entre le palpeur **25** et la mâchoire **30.** Le ressort **20** de torsion repositionne alors le dispositif **1** en position **13** initiale.

Le dispositif **1** est ainsi simple de fabrication et peu encombrant.

L'élément **8** de rappel primaire et l'élément **19** de rappel secondaire permettent un fonctionnement du dispositif **1** sans moteur, ne nécessitant donc pas de forte consommation énergétique.

Le dispositif **1,** ainsi réalisé, permet de suivre une trajectoire 3 guide prédéfinie quelconque sans réglage du dispositif **1.**

## Revendications

1. Dispositif (**1**) pour la réalisation d'une opération sur un produit (**2**) en verre, ce dispositif (**1**) comprenant :
- une première extrémité (**4**) ;
- une deuxième extrémité (**5**), définissant avec la première extrémité (**4**) une direction (**6**) de travail du dispositif (**1**) ; le dispositif (**1**) étant **caractérisé en ce que** la première extrémité (**4**) est :
- mobile par glissement par rapport à la deuxième extrémité (**5**), suivant la direction (**6**) de travail ;
- maintenue en une position (**9**) avancée, au moyen d'un élément (**8**) de rappel primaire du dispositif (**1**), à une distance (**11**) maximale de la deuxième extrémité (**5**) ;
la direction (**6**) de travail est mobile en rotation autour d'un axe (**7**) passant par la deuxième extrémité (**5**), la première extrémité (**4**) est configurée pour être mise en mouvement, de sorte à mettre en rotation la direction (**6**) de travail autour de l'axe (**7**) depuis une première position (**14**) de la direction (**6**) de travail jusqu'à une deuxième position (**16**) de la direction (**6**) de travail, la première extrémité (**4**) suit une trajectoire (**12**) suiveuse, le long de laquelle la distance entre la première extrémité (**4**) et la deuxième extrémité (**5**) est inférieure ou égale à la distance (**11**) maximale, l'élément (**8**) de rappel primaire permet la variation de la distance entre la première extrémité (**4**) et la deuxième extrémité (**5**) le long de la trajectoire (**12**) suiveuse, le dispositif (**1**) comprend un support (**22**) muni d'un pion (**23**) définissant la deuxième extrémité (**5**) du dispositif (**1**), le dispositif (**1**) comprend également une tige (**24**) munie d'un palpeur (**25**) et d'un outil (**26**) définissant conjointement la première extrémité (**4**) du dispositif (**1**).

2. Dispositif (**1**) selon la revendication 1, **caractérisé en ce qu'**il comprend un élément (**19**) de rappel secondaire, disposé au niveau de la deuxième extrémité (**5**), de sorte à mettre en rotation la direction (**6**) de travail autour de l'axe (**7**) jusqu'à la première position (**14**) de la direction (**6**) de travail.

3. Dispositif (**1**) selon l'une quelconque des revendications précédentes, **caractérisé en ce que** l'élément (**8**) de rappel primaire est un ressort (**10**) de compression.

4. Dispositif (**1**) selon l'une quelconque des revendications 2 et 3, **caractérisé en ce que** l'élément (**19**) de rappel secondaire est un ressort (**20**) de torsion.

5. Dispositif (**1**) selon l'une quelconque des revendications précédentes, **caractérisé en ce qu'**il comprend une tige (**24**) solidaire de la première extrémité (**4**) et un support (**22**) solidaire de la deuxième extrémité (**5**), la tige (**24**) coulissant dans une ouverture (**27**) du support (**22**).

6. Dispositif (**1**) selon l'une quelconque des revendications précédentes, **caractérisé en ce que** la première extrémité (**4**) comprend un outil (**26**), apte à réaliser l'opération sur le produit (**2**).

7. Dispositif (**1**) selon la revendication 6, **caractérisé en ce que** l'outil (**26**) est un galet (**31**).

8. Machine (**29**) définissant une trajectoire (**3**) guide prédéfinie et comprenant un dispositif (**1**) selon l'une quelconque des revendications précédentes, **caractérisée en ce que** la trajectoire (**12**) suiveuse de la première extrémité (**4**) est parallèle à la trajectoire (**3**) guide.

9. Machine (**29**) selon la revendication 8, **caractérisée en ce qu'**elle comprend une mâchoire (**30**) configurée pour être solidaire du produit (**2**) et pour être mue le long de la trajectoire (**3**) guide définie par la machine (**29**).

10. Machine (**29**) selon la revendication 9, **caractérisée en ce que** le dispositif (**1**) comprend un palpeur (**25**), configuré pour être en contact avec la mâchoire (**30**), l'élément (**8**) de rappel primaire poussant le palpeur (**25**) contre la mâchoire (**30**), de telle sorte que la première extrémité (**4**) suive la trajectoire (**3**) guide définissant la trajectoire (**12**) suiveuse.

## Patentansprüche

1. Vorrichtung (1) zur Durchführung einer Operation an einem Glasprodukt (2), wobei diese Vorrichtung (1) Folgendes umfasst:
- ein erstes Ende (4);
- ein zweites Ende (5), das mit dem ersten Ende (4) eine Arbeitsrichtung (6) der Vorrichtung (1) definiert;
wobei die Vorrichtung (1) **dadurch gekennzeichnet ist, dass das erste Ende (4):**
- in Abhängigkeit von der Arbeitsrichtung (6) zum zweiten Ende (5) verschiebbar;
- in einer vorgeschobenen Position (9), mittels eines primären Rückstellelements (8) der Vorrichtung (1), mit einem maximalen Abstand (11) vom zweiten Ende (5) gehalten;
die Arbeitslenkung (6) ist drehbar um eine Achse (7), die durch das zweite Ende (5) verläuft, das erste Ende (4) ist so konfiguriert, dass sie in Bewegung gesetzt wird, so dass die Arbeitsrichtung (6) um die Tax (7) von einer ersten Position (14) der Arbeitsrichtung (6) zu einer zweiten Position (16) der Arbeitslenkung (6) gedreht wird, das erste Ende (4) folgt einer Schleppspur (12), wobei der Abstand zwischen dem ersten Ende (4) und dem zweiten Ende (5) kleiner oder gleich dem maximalen Abstand (11) ist, wobei das primäre Rückstellelement (8) die Variation des Abstands zwischen dem ersten Ende (4) und dem zweiten Ende (5) entlang der Schleppkurve (12) ermöglicht, umfasst die Vorrichtung (1) eine Halterung (22) mit einem Stift (23), der das zweite Ende (5) der Vorrichtung (1) definiert, und die Vorrichtung (1) umfasst auch eine Stange (24), die mit einem Taststift (25) versehen ist und einem Werkzeug (26), das das erste Ende (4) der Vorrichtung (1) gemeinsam definiert.

2. Vorrichtung (1) nach Anspruch 1, **dadurch gekennzeichnet, dass** sie ein sekundäres Rückstellelement (19) umfasst, das am zweiten Ende (5) angeordnet ist, so dass die Arbeitsrichtung (6) um den Bolzen (7) bis zur ersten Position (14) der Arbeitslenkung (6) rotiert.

3. Vorrichtung (1) nach einem der vorhergehenden Ansprüche, **dadurch gekennzeichnet, dass** das primäre Rückstellelement (8) eine Druckfeder (10) ist.

4. Vorrichtung (1) nach einem der Ansprüche 2 und **3, dadurch gekennzeichnet, dass** das sekundäre Rückstellelement (19) eine Torsionsfeder (20) ist.

5. Vorrichtung (1) nach einem der vorhergehenden Ansprüche, **dadurch gekennzeichnet, dass** sie eine Stange (24) umfasst, die fest mit dem ersten Ende (4) verbunden ist, und eine Stütze (22), die fest mit dem zweiten Ende (5) verbunden ist, wobei die Stange (24) in einer Öffnung (27) des Trägers (22) verschiebbar ist.

6. Vorrichtung (1) nach einem der vorhergehenden **Ansprüche, dadurch gekennzeichnet, dass** das erste Ende (4) ein Werkzeug (26) umfasst, das zur Durchführung des Vorgangs am Produkt (2) geeignet ist.

7. Vorrichtung (1) nach Anspruch 6, **dadurch gekennzeichnet, dass** das Werkzeug (26) eine Rolle (31) ist.

8. Maschine (29), die eine vordefinierte Führungsbahn (3) definiert und eine Vorrichtung (1) nach einem der vorhergehenden Ansprüche umfasst, **dadurch gekennzeichnet, dass** die Schleppbahn (12) des ersten Endes (4) parallel zur Führungsbahn (3) verläuft.

9. Maschine (29) nach Anspruch 8, **dadurch gekennzeichnet, dass** sie eine Backe (30) umfasst, die so konfiguriert ist, dass sie fest mit dem Produkt (2) verbunden ist und entlang der von der Maschine (29) definierten Bahn (3) geführt wird.

10. Maschine (29) nach Anspruch 9, **dadurch gekennzeichnet, dass** die Vorrichtung (1) einen Taststift (25) umfasst, der so konfiguriert ist, dass er Kontakt mit der Backe (30) hat, wobei das primäre Rückstellelement (8) den Taststift (25) gegen die Backe (30) drückt, so dass das erste Ende (4) der Bahn (3) der Führung folgt, die die Schleppbahn (12) definiert.

## Claims

1. Device (1) for performing an operation on a glass product (2), this device (1) comprising:
- a first end (4);
- a second end (5), defining with the first end (4) a working direction (6) of the device (1);
the device (1) being **characterised in that** the first end (4) is:
- slidably movable relative to the second end (5), according to the working direction (6);
- held in an advanced position (9), by means of a primary return element (8) of the device (1), at a maximum distance (11) from the second end (5);
the working direction (6) is rotatably mobile about an axis (7) passing through the second end (5), the first end (4) is configured to be moved in such a way as to rotate the working direction (6) about the axis (7) from a first position (14) of the working direction (6) to a second position (16) of the working direction (6), the first end (4) follows a following path (12), along which the distance between the first end (4) and the second end (5) is less than or equal to the maximum distance (11), the primary return element (8) allows variation of the distance between the first end (4) and the second end (5) along the following path (12), the device (1) comprises a support (22) equipped with a pin (23) defining the second end (5) of the device (1), the device (1) also comprises a rod (24) equipped with a touch probe (25) and a tool (26) jointly defining the first end (4) of the device (1).

2. Device (1) according to claim 1, **characterised in that** it comprises a secondary return element (19), arranged at the second end (5), so as to rotate the working direction (6) about the axis (7) up to the first position (14) of the working direction (6) .

3. Device (1) according to any one of the preceding claims, **characterised in that** the primary return element (8) is a compression spring (10).

4. Device (1) according to any one of claims 2 and 3, **characterised in that** the secondary return element (19) is a torsion spring (20).

5. Device (1) according to any one of the preceding claims, **characterised in that** it comprises a rod (24) integral with the first end (4) and a support (22) integral with the second end (5), the rod (24) sliding in an opening (27) of the support (22) .

6. Device (1) according to any one of the preceding claims, **characterised in that** the first end (4) comprises a tool (26), capable of performing the operation on the product (2).

7. Device (1) according to claim 6, **characterised in that** the tool (26) is a roller (31).

8. Machine (29) defining a predefined guide path (3) and comprising a device (1) according to any one of the preceding claims, **characterised in that** the following path (12) of the first end (4) is parallel to the guide path (3).

9. Machine (29) according to claim 8, **characterised in that** it comprises a jaw (30) configured to be integral with the product (2) and to be moved along the guide path (3) defined by the machine (29).

10. Machine (29) according to claim 9, **characterised in that** the device (1) comprises a touch probe (25), configured to be in contact with the jaw (30), the primary return element (8) pushing the touch probe (25) against the jaw (30), such that the first end (4) follows the guide path (3) defining the following path (12).
